Europäisches Patentamt

European Patent Office

Office européen des brevets

(19)

(11) Publication number: **0 286 780 B1**

# EUROPEAN PATENT SPECIFICATION

(12)

(45) Date of publication of patent specification: **30.10.91**   (51) Int. Cl.⁵: **F03G 7/06**

(21) Application number: **88100946.8**

(22) Date of filing: **22.01.88**

(54) **Nitinol drive device.**

(30) Priority: **13.02.87 SE 8700599**

(43) Date of publication of application:
**19.10.88 Bulletin 88/42**

(45) Publication of the grant of the patent:
**30.10.91 Bulletin 91/44**

(84) Designated Contracting States:
**DE FR GB**

(56) References cited:
**DE-A- 1 476 719**
**US-A- 4 030 298**

(73) Proprietor: **International Business Machines
Corporation
Old Orchard Road
Armonk, N.Y. 10504(US)**

(72) Inventor: **Al-Jaroudi, Mohammed Youssef
Frejgatan 1
S-114 21 Stockholm(SE)**

(74) Representative: **Ekström, Gösta E.
IBM Svenska AB Intellectual Property De-
partment
S-163 92 Stockholm(SE)**

## Description

The invention described and claimed herein relates to a drive device comprising an element of shape memory alloy, preferably a drive device for a fan or electrical generator.

It is known in the prior art to use so called Shape-Memory Alloys such as Nitinol in a thermobile engine. Such an engine is described in the article The Thermobile Nitinol Engine by Frederick E Wang, Society of Automotive Engineers Inc, 1985, which article is incorporated in this application by reference.

It is also known in the prior art, for example by DE-A-1 476 719, to use a bimetal in a thermal machine. In figure 5 of said document a device which uses a fan coupled to the driven wheel is shown, which cools down the bimetal belt at the heating point, that means, changes in the heat supply is compensated. Due the characteristics of the bimetal a self-adjusting speed of the belt is obtained.

A wire of a memory-shape alloy can easily be deformed to any shape. However, when the wire is heated to above a certain transition temperature it assumes a rigidity and preset configuration. The transition temperature is determined by the composition of the alloy.

The driving device according to the above mentioned article consists of a wire loop of a shape memory alloy drivingly engaging two wheels having dissimilar diameters. The wire is heated up above the transition temperature at the smaller wheel thereby causing the wire to assume its straight shape and the wheel to rotate. The wire is then cooled down below the transition temperature on its travel to the other wheel. The thermobile according to the article uses air as cooling medium for the wire and some sort of energy source, such as hot water, as heating medium.

The disadvantage with a driving device of this kind is that the efficiency of cooling is low and therefore the RPM value low.

The invention as claimed is intended to remedy this drawback. It solves the problem by coupling a fan to the driving device in such a way that the air flow caused by the rotation of the fan cools the wire down below the transition temperature.

The advantages offered by the invention are mainly that the driving device can be mounted as an integral part of the fan or generator which is to be driven and that thereby a very compact and cheap fan or generator assembly can be obtained.

The invention, which is defined in the attached claims, is described in detail below with reference to the drawings in which:-

Figure 1 shows the thermobile according to the above cited article,

Figure 2 shows a side view of a generator and/or fan assembly with a driving device in accordance with the invention, and
Figure 3 shows a top view of a generator and/or fan assembly with a driving device in accordance with the invention.

Detailed Desription of the Invention.

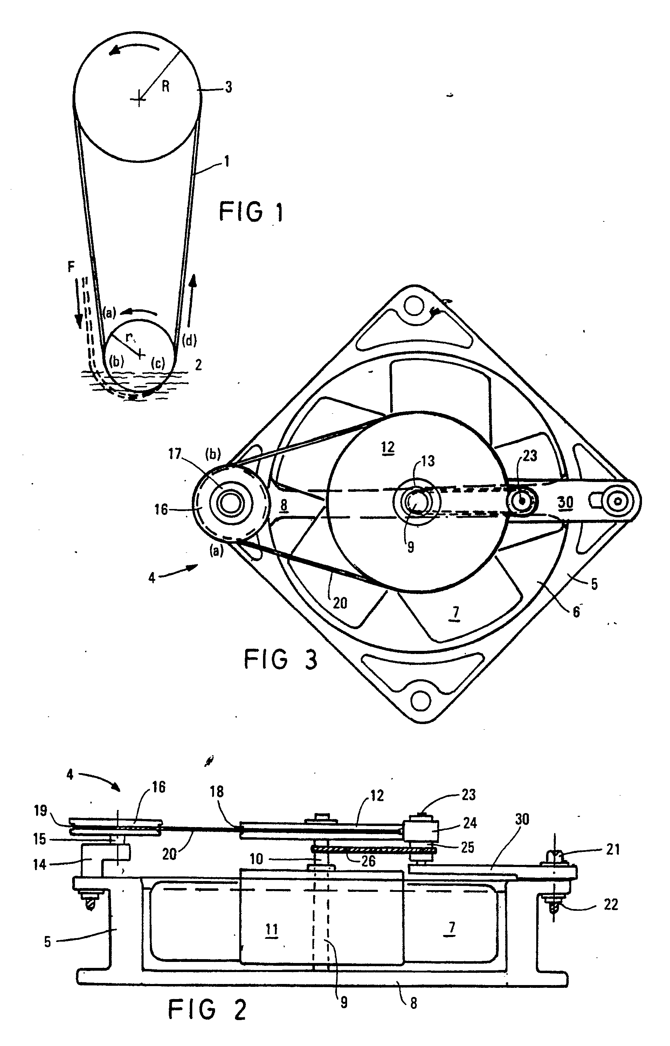

Fig. 1 shows the Thermobile Nitinol Engine mentioned in the preamble of the subject specification. The termobile engine consists of a wire loop 1 drivingly engaging two wheels 2 and 3 where wheel 3 has a radius R greater than the radius r of wheel 2. The shape of the looped wire 1 at temperatures above the transition temperature is straight. Wheel 2 is halfway immersed in hot water having a temperature well above the transition temperature of the Nitinol wire. As the wire segment moves from (a) to (b) it is bent around wheel 2. At the same time the wire segment is heated by coming into contact with the hot water as well as the hot wheel as it moves on to (c). When the wire is heated over its transition temperature from under its transition temperature it tries to regain its straight shape and thereby takes a form depicted by the dotted lines. In taking this form, the wire creates a tugging force, F, along the loop and brings in a new wire segment into the hot water from (a) to (b). Meanwhile, the original wire segment becomes straight as it moves from (c) to (d). When traveling further from (d) through the air to the larger wheel (3), the temperature of the wire segment drops under the transition temperature again. Thus, the force, F, keeps the wire loop moving thereby providing a steady, continual rotating motion of the two wheels, from which mechanical energy can be extracted.

The invention is described below with reference to the figures 2 and 3. Fig. 2 shows a side view and fig. 3 shows a top view of the generator and/or fan assembly 4. The assembly consists of a frame 5 which has a circular opening 5 housing a generator and/or fan 7 and a cross beam 8 fixedly mounted to the frame. The generator and/or fan 7 is rotably journalled in a first axle spindle 9 which is fixedly mounted on said cross beam 8. A second axle spindle 10 is fixedly mounted on the housing 11 of the generator and/or fan 7. A first wheel 12 is journalled in a bearing 13 on said second axle spindle 10. A support 14, which is fastened in the frame by means of a nut, is provided with a third axle spindle 15 on which a second wheel 16 is rotatably journalled in a bearing 17. The first wheel 12 has a diameter substantially greater than the diameter of said second wheel 16. The wheels 12 and 16 are provided with grooves 18 resp. 19 extending peripherally in their outer cylindrical surfaces. A wire loop 20 of a memory-shape alloy fits into the grooves 18 and 19 and drivingly engages the two wheels 12 and 16. The support 14 is adjustable so that to give the wire loop a suitable stress. If the wire loop part (a) to (b) is exposed to a temperature above the transition temperature of the memory-shape alloy and the other part of the loop is exposed to a temperature below that transition temperature the combination of the two wheels 12 and 16 and the wire loop 20 will work as a thermobile engine, that means, the wheels will rotate in one or the other direction.

The rotational movement of wheel 12 is transmitted by means of a gear mechanism to the axle spindle 10 thereby giving the generator/fan a stepped-up rotational movement in the opposite direction. The air flow caused by the rotation of the fan 7 causes forced cooling of the wire loop 20. The gear mechanism consists of a support 30 which is mounted to the frame by means of a bolt 21 and a nut 22. The support 30 is provided with a fourth axle spindle 23 fixidly mounted thereto. A dubble-pulley 24,25 is rotably journalled in bearings on said fourth axle spindle. The upper pulley 24 is in drivingly engagement with wheel 12. The lower pulley 25 and the second axle spindle 10 are provided with grooves extending peripherally. A driving rope 26, which fits into said grooves, drivingly engages the pulley 25 and the axle spindle 10. As is easily realized the dimensioning of the fan 7 is dependant upon the use of the assembly as a fan or as a generator.

In the generator case electrical power from the generator can be coupled through a cable (not shown) in an internal channel through the axle spindle 9 and the cross beam 8 to the outside of the assembly.

## Claims

1. A drive device of the type utilizing the property of shape memory alloys comprising a first wheel (12) and a second wheel (16) of dissimilar diameters drivingly coupled together by means of a wire loop (20) of a shape memory alloy, whereby said shape memory alloy has a transition temperature above which it assumes a rigidity and preset configuration, a heating medium for raising the temperature of a segment of said wire loop at said second wheel (16) above the transition temperature, thereby causing the rotation of the wheels,
characterized by
a fan (7) for enforced cooling of said segment of the wire loop, when it moves out of the heating source, to a temperature below said transition point, whereby
said fan (7) being coupled for rotation with said first wheel (12).

2. A drive device according to claim 1, characterized in that
the fan (7) is coupled by means of gear arrangement (24, 25, 26) to said first wheel (12).

3. A drive device according to claim 1 or 2, characterized in that
the housing (11) of the fan contains an electrical generator driven by the fan.

## Revendications

1. Moteur du type utilisant la propriété des alliages à mémoire de forme, comprenant une première roue (12) et une deuxième roue (16) de diamètre différent entraînées ensemble au moyen d'un fil (20) en forme de boucle fait dans un alliage à mémoire de forme, ce qui fait que ledit alliage à mémoire de forme a une température de transition au-dessus de laquelle il assume une rigidité et une configuration préétablie, un moyen de chauffage pour élever la température d'un segment de ladite boucle de fil à ladite deuxième roue (16) au-dessus de la température de transition, ce qui provoque la rotation des roues,
caractérisé par:
un ventilateur (7) pour le refroidissement forcé dudit segment de boucle de fil, lorsqu'il se déplace hors de la source de chaleur, à une température en-dessous dudit point de transition, moyen par lequel
ledit ventilateur est couplé en rotation avec ladite première roue (12).

2. Moteur selon la revendication 1,
caractérisé en ce que:
le ventilateur (7) est couplé au moyen d'un mécanisme d'engrenage (24, 25, 26) à ladite première roue (12).

3. Moteur selon les revendications 1 ou 2,
caractérisé en ce que:
le boîtier (11) du ventilateur contient un générateur électrique commandé par le ventilateur.

## Patentansprüche

1. Antriebseinrichtung jener Art, welche die Eigenschaften von Legierungen mit Formgedächtnis verwendet, mit einem ersten Rad (12) und einem zweiten Rad (16), wobei die Räder verschiedene Durchmesser besitzen und mittels einer Drahtschleife (20) aus einer Legierung mit Formgedächtnis auf Antrieb verbunden sind und die Legierung mit Formgedächtnis eine Übergangstemperatur besitzt, oberhalb der sie eine Starrheit und vorgegebene Gestalt annimmt, und mit einem Erwärmungsmedium, um die Temperatur eines Abschnittes der Drahtschleife bei dem zweiten Rad (16) über die Übergangstemperatur anzuheben und hiedurch ein Drehen der Räder hervorzurufen,

gekennzeichnet durch

einen Ventilator (7) für eine Zwangskühlung des genannten Drahtabschnittes, wenn sich dieser aus der Wärmequelle herausbewegt, auf eine Temperatur unterhalb des Übergangspunktes, wobei

der Ventilator (7) mit dem ersten Rad (12) auf Drehung gekuppelt ist.

2. Antriebseinrichtung nach Anspruch 1,

dadurch gekennzeichnet, daß

der Ventilator (7) mittels einer Getriebeanordnung (24, 25, 26) mit dem ersten Rad (12) gekuppelt ist.

3. Antriebseinrichtung nach Anspruch 1 oder 2,

dadurch gekennzeichnet, daß

das Gehäuse (11) des Ventilators einen von dem Ventilator angetriebenen elektrischen Generator enthält.

FIG 1

FIG 3

FIG 2